# EUROPÄISCHE PATENTSCHRIFT

(11) **EP 0 644 811 B1**
(45) Veröffentlichungstag und Bekanntmachung des Hinweises auf die Patenterteilung: **26.11.1997**
(21) Anmeldenummer: 94913537.0
(22) Anmeldetag: 06.04.1994
(51) Int. Cl.: B23H 11/00, B23H 1/10

(54) **VORRICHTUNG ZUR ELEKTROEROSIVEN BEARBEITUNG**
ELECTRICAL DISCHARGE MACHINING DEVICE
DISPOSITIF D'USINAGE PAR ELECTRO-EROSION

(30) Priorität: 06.04.1993 DE 4311302
(43) Veröffentlichungstag der Anmeldung: 29.03.1995
(73) Patentinhaber: AG für industrielle Elektronik AGIE Losone bei Locarno, CH-6616 Losone/Locarno (CH)
(72) Erfinder: DERIGHETTI, René, CH-6616 Losone (CH)
(74) Vertreter: von Samson-Himmelstjerna, Friedrich R., Dipl.-Phys.
(86) Internationale Anmeldenummer: EP9401061
(87) Internationale Veröffentlichungsnummer: WO9422627

(56) Entgegenhaltungen:
- DE-A- 1 565 004
- DE-B- 1 139 359
- DE-U- 1 786 882
- DE-U- 1 979 235
- FR-A- 1 327 593
- INDUSTRIE-ANZEIGER, Bd.93, Nr.87, 19. Oktober 1971, DE Seiten 2169 - 2170 R.KURR 'Modell für die selbsttättige Prozessoptimierung bei der funkenerosiven Bearbeitung' in der Anmeldung erwähnt

## Beschreibung

Die Erfindung betrifft eine Elektroerosionsvorrichtung mit einer Pinole zur Verschiebung der Werkzeugelektrode in Z-Richtung und einem allseits verschließbaren Behälter, welcher zur Aufnahme eines Werkstückes und einer insbesondere unter Druck zu- und abführbaren Flüssigkeit ausgelegt ist, und aufweist: ein das Werkstück tragendes Bodenelement und ein Deckelelement, das die Pinole gleitend verschiebbar umgreift, und mit dem Bodenelement über ein Verschlußsystem kraftschlüssig verbind- und von diesem lösbar ist.

Zum Stand der Technik werden genannt:
- DE-A 1 565 004
- US-3 399 125
- DE-AS 1 294 162
- DE-AS 1 139 359
- DE-Z: H. Opitz: Modell für die selbsttätige Prozeßoptimierung bei der funkenerosiven Bearbeitung, in: Industrie-Anzeiger 93.Jg. Nr. 87 v. 19.10.71, S. 2169-2170
- DE-Z: R. Kurr: Adaptive Control-Systeme für die Funkenerosion, in: VDI-Z 115 (1973) Nr. 10 - Juli, S. 848-853

Bei der Elektroerosion bestimmt die dielektrische Spülung zu einem wesentlichen Teil die Größe des Abtrags und des Elektrodenverschleisses sowie die Bearbeitungsgenauigkeit und die Oberflächengüte des bearbeiteten Werkstückes. Die dielektrische Spülflüssigkeit dient u.a. zur Isolation von Senkelektrode und Werkstück, zum Erreichen einer hohen Wirkungsdichte an der Wirkstelle der elektrischen Entladung, zur Kühlung von Elektrode und Werkstück und zum Abtransport abgetragener Partikel.

Insbesondere bei der elektroerosiven Bearbeitung mit einer Senkelektrode erfolgt die dielektrische Spülung in verschiedenster Art und Weise. So ist es beispielsweise bekannt, die Senkerosion in einem nach oben hin offenen oder aber zu allen Seiten hin geschlossenen Behälter durchzuführen, der ganz oder teilweise mit einem Bad aus einer dielektrischen Flüssigkeit gefüllt ist. In Abhängigkeit der gewünschten Bearbeitung (z.B. Schruppen, Schlichten oder Feinschlichten) sowie je nach Werkstück- und Elektrodengeometrie und je nach Art der verwendeten dielektrischen Flüssigkeit wird die Spülung dabei nach Art einer offenen Strahlspülung, einer Druck- oder Saugspülung, einer Bewegungsspülung (z.B. durch Abheben der Elektrode) oder mittels einer Kombination dieser Spültechniken durchgeführt.

Zur Gewährleistung einer guten Spülfunktion wird das Dielektrikum in einer Filteranlage von den Abtragsteilchen seiner Elektroden (Werkstück und Senkelektrode) gereinigt und gekühlt. Pump- und/oder Saugeinrichtungen sorgen für die Zu- und Ableitung des Dielektrikums aus dem Dielektrikumsbehälter.

Insbesondere beim Schruppen eines Werkstückes - d.h. beim Abtragen relativ großvolumiger Partikel - empfiehlt es sich, das Spüldielektrikum einer hohen Druckdifferenz auszusetzen bzw. mit hohem Druck zuzuführen. Zu diesem Zweck muß der Dielektrikumsbehälter den Arbeitsbereich nach allen Seiten hin im zur Erosion nötigen Maße drucksicher verschliessen. Zur Erhöhung der Erosionsgeschwindigkeit (bzw. des Abtrags) wird nämlich die Stromdichte gesteigert, was wiederum eine gesteigerte Spülung bzw. eine größere Strömungsgeschwindigkeit des Dielektrikums im Erosionsspalt verlangt.

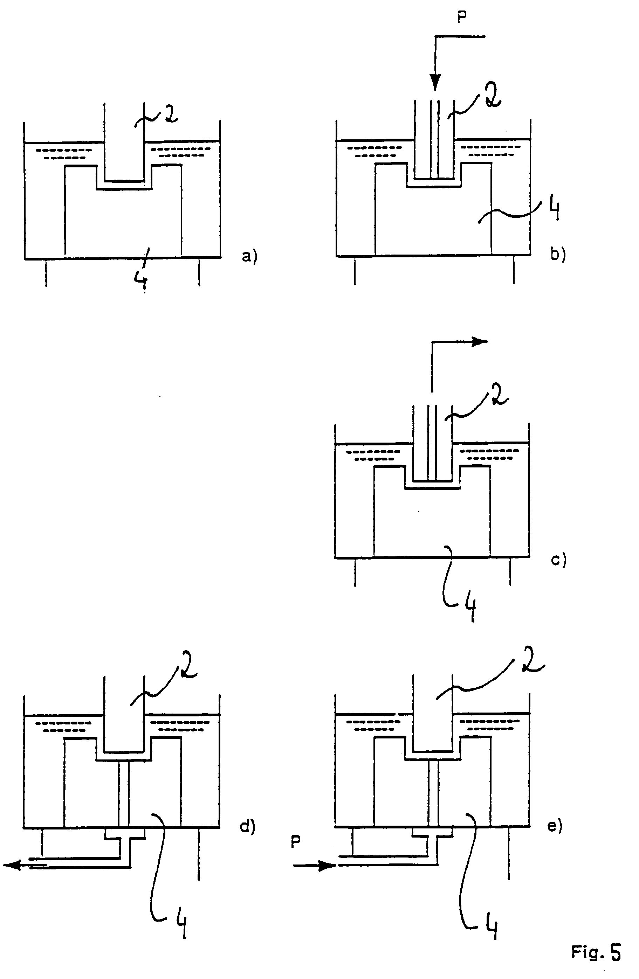

Die Fig. 5a-e zeigen schematische Teilansichten bekannter Erodiervorrichtungen (bzw. -maschinen) bzw. verschiedener Spülvorrichtungen und Spülbehälter (bzw. Spültöpfe), bei welchen das Dielektrikum unter Druck durch den Arbeitsspalt gespült bzw. geleitet wird. Fig. 5a zeigt einen Abschnitt einer Elektroerosionsmaschine, bei der die Senkelektroerosion in einem offenen Behälter durchgeführt wird, Fig. 5b eine Maschine, bei der die Dielektrikumsufuhr unter Druck durch eine Leitung in der Senkelektrode erfolgt, Fig. 5c ein Absaugen des Dielektrikums durch eine Leitung in der Elektrode, Fig. 5d ein Absaugen des Dielektrikums durch eine Leitung im Werkstück und Fig. 5e ein Zuführen des Dielektrikums durch eine Leitung im Werkstück.

Um möglichst konstante Bearbeitungsergebnisse und eine möglichst gleichbleibende Oberflächengüte zu erzielen, ist auch die Strömungsgeschwindigkeit des Dielektrikums möglichst konstant zu halten. Bei der Senkerosion ist es daher besonders vorteilhaft, das Dielektrikum zur Sicherung einer genügend hohen und konstanten Strömungsgeschwindigkeit von außen Druck mit Druck in den Spülbehälter zu führen.

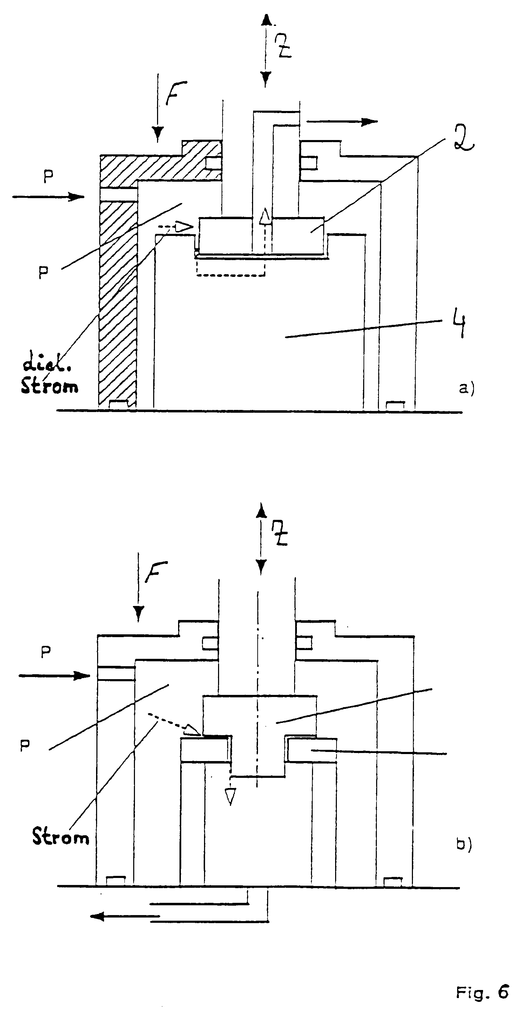

Die Fig. 6a und 6b zeigen eine bekannte Erosionsvorrichtung, bei der Werkstück und Senkelektrode in einer allseits geschlossenen Druckkammer bzw. in einem allseits geschlossenen Druckbehälter angebracht sind. Das Dielektrikum wird durch die Senkelektrode (Fig. 6a) oder durch das Werkstück (Fig. 6b) aus der Arbeitszone sowie dem Druckbehälter abgeführt.

Der Druckbehälter besteht aus einem ersten Behälterelement - einer Art Haube - die gegen ein zweites Behälterelement - den Boden - durch die Kraft F gedrückt wird. Die Maschine muß die Kraft F zum Schließen des Behälters aufbringen. Eine Pinole durchläuft die Oberwand des Behälters, so daß das im Behälter angeordnete Werkstück durch ein Absenken der Elektrode in der durch einen Pfeil angezeigten Z-Richtung bearbeitet werden kann.

Der bekannte Druckbehälter hat sich zwar bezüglich seiner Druckfestigkeit bewährt, eine Erosion in X- und Y-Richtung ist jedoch nicht oder zumindest nur sehr eingeschränkt möglich. Um in diesen Richtungen zu erodieren, ist es daher nötig, zunächst das Haubenteil des Druckbehälters zeitaufwendig abzumontieren und die Erosion in einem äußeren - nach oben hin geöffneten - wannenartigen zweiten Behälter durchzuführen. Für einen erneuten Erodiervorgang "unter Druck" ist der Behälter entsprechend wieder an die Elektroerosionsmaschine zu montieren.

Bei der gattungsgemäßen US-3 399 125 wird zum Verschließen des Spülbehälters die Pinole so lange in Richtung Werkstück abgesenkt, bis das Deckelelement auf dem Bodenelement aufliegt. Anschließend werden Boden- und Deckelelement kraftschlüssig miteinander verschraubt und der Druck im Spülbehälter erhöht. Bei der Bearbeitung wird die starr mit der Pinole verbundene Elektrode in Richtung Werkzeug abgesenkt, wobei sich die Pinole in das Deckelelement einschiebt. Zum Öffnen des Spülbehälters wird die kraftschlüssige Schraubverbindung zwischen Deckel- und Bodenelement gelöst und die Pinole vom Werkstück abgehoben, bis die Bearbeitungsstelle frei zugänglich ist. Der Spülbehälter ist damit nur umständlich handhabbar.

Bei der aus der DE-1 565 004 A1 bekannten Vorrichtung ist das Deckelelement des Spülbehälters fest mit der Pinole verbunden, während das Bodenelement eine Öffnung in seinem Bodenbereich hat. Zum Verschließen des Spülbehälters wird die Pinole auf das Werkzeug abgesenkt und dabei die Öffnung im Bodenelement von einem Werkstück-Oberflächenabschnitt verschlossen. Beim Erhöhen des Druckes in dem Behälter wirkt einerseits eine Kraft auf das Bodenelement, das dieses dicht gegen das Werkstück drückt, und andererseits - als Nachteil - auch die gesamte durch den Spüldruck hervorgerufene und in Z-Richtung gerichtete Kraft auf die Pinole.

Die Erfindung zielt darauf ab, einen einfach handhabbaren Spülbehälter zu schaffen.

Die Erfindung löst das Problem bei einer gattungsgemäßen Vorrichtung dadurch, daß das Deckelelement aus weiteren Teilelementen besteht, die gleitend aneinander verschiebbar sind.

Im Vergleich zum Stand der Technik erlaubt es die Verschiebbarkeit der Teilelemente, den Behälter unkompliziert - insbesondere auch automatisch - zu öffnen und schliessen. Dies ermöglicht wiederum einen schnellen und unkomplizierten Wechsel zwischen einer Bearbeitung mit einer Dielektrikumszufuhr unter Druck (geschlossener Behälter - Bearbeitung i.w. in Z-Richtung) und einer Bearbeitung, bei der die Dielektrikumszufuhr soweit druckfrei erfolgt, daß mit geöffnetem Behälter (in drei oder mehr Achsen, Planetärerosion) gearbeitet werden kann.

Der Behälter besteht somit in vorteilhafter Weise aus einem ("unteren") Bodenelement und einem Deckelelement, das wiederum aus mehreren gleitend aneinander (und z.B. auch ineinander) verschieblichen Teilelementen besteht. Das obere Deckelelement wird am unteren Element verankert. Das Einund Ausfahren der Teilelemente des Deckelelementes schließt und öffnet den Behälter.

Bei einer besonders bevorzugten Weiterbildung der Erfindung umgreift das Deckelelement die Pinole unmittelbar oder über ein an der Pinole starr angebrachtes Zwischenstück gleitend verschiebbar (Anspruch 2). Für die Alternative des starr angebrachten Zwischenstückes ist z.B. die Verbindung zwischen dem Deckelelement des Behälters und dem Grund- oder Bodenteil mit dem Schnellverschlußsystem versehen. Zum Öffnen des Behälters wird zunächst der Schnellverschluß gelöst. Dann werden die Teilelemente nach oben hin eingefahren. Die Teilelemente sind damit in besonders praktischer Weise derart an der Elektroerosionsmaschine angeordnet, daß sie im eingefahrenen Zustand des Behälters die (nunmehr ohne Druckspülung in herkömmlicher Weise erfolgende) Elektroerosion in X- und Y-Richtung nicht stören. Für die Alternative des unmittelbaren Umgreifens der Pinole bildet diese dann im Sinne der Erfindung eines der Teilelemente des Behälters.

Bei einer bevorzugten Ausgestaltung der Erfindung ist das Verschlußsystem ein Schnellverschluß, insbesondere ein Bajonettverschluß (Anspruch 12). Ein Schnell- und insbesondere ein Bajonettverschlußsystem läßt sich baulich leicht realisieren und erlaubt eine besonders schnelle und unkomplizierte Handhabung des Behälters. Bevorzugt wird der Bajonettverschluß durch eine oder mehrere Nuten im Bodenelement und in diese eingreifende Klauen am äußersten Ringelement gebildet. Zum Verschliessen und Öffnen des Verschlusses wird das äußerste Ringelement am Bodenelement verschoben. Auch der Bajonettverschluß allein realisiert damit die Technik des Aneinanderverschiebens nach Anspruch 1. Bevorzugt ist das Bodenelement ein Maschinentisch (Anspruch 3).

Bei einer weiteren bevorzugten Ausführungsform sind die relativ aneinander gleitend verschiebbaren Teilelemente als axial teleskopartig ineinanderschiebbare Ringelemente verschiedenen Durchmessers ausgelegt (Anspruch 4). Dabei wird z.B. der Innendurchmesser eines ersten inneren Ringelementes an den Aussendurchmesser einer (bzw. der) Pinole - oder ihrer Verlängerung - der Elektroerosionsvorrichtung angepaßt. Dieser innere Ring ist von einem oder mehr - insbesondere von zwei - weiteren Ringelementen umgeben, so daß sich ein im geschlossenen Zustand stufenartig kegelförmiger Behälter ergibt. Der kegelförmige Behälter kann gut der Dimension und der Form verschiedenster Elektroerosionsvorrichtungen angepaßt werden. Die Erfindung ist damit auch zum unproblematischen Nachrüsten bereits bestehender Elektroerosionsmaschinen geeignet. Ein besonderer Vorteil des Teleskopprinzips ergibt sich durch die platzsparende Unterbringung der Teleskopelemente im geöffneten Zustand des Behälters. Ferner ist ein Teleskop besonders leicht automatisch ein- und ausfahrbar. Auf diese Weise ist es bei einer entsprechenden Auslegung der Elektroerosionsvorrichtung mit einem weiteren offenen Behälter, der ausserhalb des verschließbaren Behälters angeordnet ist, sogar möglich, vollautomatisch zwischen einer Bearbeitung mit oder ohne Druckbehälter zu wechseln. Wenn das Teleskop eingefahren - und damit der Behälter geöffnet ist - kann die Erosion in allen zur Verfügung stehenden Achsrichtungen erfolgen. Wird wiederum ein Betrieb unter Druck gewünscht, wird einfach das Teleskop ausgefahren und der Behälter durch Verankerung des Teleskopes am Bodenelement, d.h. z.B. an einer Palette oder an der Maschinentischplatte, verschlossen.

Bei einer weiteren vorteilhaften Variante wird das Werkstück in Z-Richtung verschieblich geführt (Anspruch 10), so daß der Behälter z.B. durch ein Heben und Senken des Bodens geöffnet und verschlossen wird. Der Boden ist damit relativ zum oberen Deckelabschnitt verschieblich (und damit i.S. der Erfindung "an diesem" verschieblich geführt).

Bei einer weiteren besonders bevorzugten Ausführungsform der Erfindung sind die Ringelemente - in einer Querschnittsansicht gesehen, durch deren Ebene die Ringachse verläuft - stufenartig ausgebildet (Anspruch 5). Durch die stufenartige Auslegung läßt sich der Behälter mit wenigen Elementen auf einen genügend großen Durchmesser aufweiten und damit auch beengeten Platzverhältnissen besonders gut anpassen.

Besonders bevorzugt weisen die Ringelemente einen zur Ringachse zylindrischen Abschnitt auf, an dessen beide Enden sich ringscheibenartige Abschnitte anschliessen, wobei einer der beiden ringscheibenartigen Abschnitte relativ zum zylindrischen Abschnitt radial nach außen und der andere ringscheibenartige Abschnitt radial nach innen gerichtet ist (Anspruch 6). Bevorzugt weist das die Pinole umgreifende Teilelement einen zweiten inneren zylindrischen Abschnitt auf, dessen Innenseite an der Pinole der Erosionsvorrichtung gleitend befestigt ist. (Anspruch 7). Bei einer Auslegung der Erfindung nach einem der beiden oder beiden vorgenannten Ansprüche(n) können die einzelnen Ringelemente besonders gut gegeneinander abgedichtet werden. Besonders bevorzugt sind die stufenartigen Teilelemente dazu an oder nahe zu ihrem inneren und/oder äußeren Umfangsrand mit einer oder mehreren Dichtung(en) versehen (Anspruch 8).

Das letzte und untere Teilelement wird am Grundelement verankert und abgedichtet.

Bei einer weiteren bevorzugten Ausgestaltung dichten die Aussenranddichtungen jeweils den Außenrand des äußeren ringscheibenartigen Abschnittes eines Ringelementes kleineren Durchmessers gegen den inneren Rand des zylindrischen Abschnittes des jeweils nächst größeren Teilelementes ab (Anspruch 9). Die Dichtungen sind damit in vorteilhafter Weise so angeordnet, daß ein zur Druckspülung ausreichend hoher Druck in der Kammer entstehen kann und die Teleskopverschiebbarkeit der Teilelemente nicht beeinträchtigt wird.

Eine weitere vorteilhafte Variante der Erfindung weist ein in einer Wand eines Teilelementes angeordnetes Überdruckventil und/oder einen Hahn zur Entgasung des Behälters auf (Anspruch (11). Dabei wird das Überdruckventil (oder eine entsprechende Sicherheitseinrichtung) bevorzugt in die Steuer- und Überwachungsfunktionen der Elektroerosionsvorrichtung einbezogen.

Weitere Verbesserungen und Weiterbildungen der Erfindung lassen sich durch folgende Maßnahmen erreichen: einen Impuls- und/oder Stromgenerator und eine Einrichtung zum Erfassen von Spannung und Strom im Erosionsspalt (Anspruch 13); eine Prozessteuerungseinrichtung zur Bestimmung des Elektrodenvorschubs und zur adaptiven Anpassung der Generatorparameter zur Optimierung der Erosion (Anspruch 14) und eine Auslegung der Prozeßsteuerungseinrichtung zur adaptiven Anpassung und Einstellung der Strömungsgeschwindigkeit des Dielektrikums über eine Dielektrikums-Flußpumpe zur Optimierung der Erosion (Anspruch 15). Der Einsatz dieser Einrichtungen und Zusätze vereinfacht den Betrieb und optimiert die Einsatzmöglichkeiten der Erfindung, ohne daß sich die Bedienung für den Anwender verkompliziert. Es ist vielmehr möglich, den Einsatz der verschiedenen Optionen bereits werksseitig bei der Entwicklung der Maschine weitgehend zu automatisieren. Insbesondere kann in der Druckkammer bei einer entsprechenden Auslegung des Generators als (Gleich-)Stromgenerator und einer entsprechenden Verfahrenssteuerung auch mit einem stationären Lichtbogen erodiert werden.

Die Dielektrikumszu- und ableitung läßt sich bei der vorliegenden Erfindung schließlich besonders gut dadurch realisieren, daß das Dielektrikum durch eine Senkelektrode oder durch eines der Teilelemente hindurch der Erodierzone zu- oder von ihr abgeführt wird (Anspruch 16).

Eine weitere vorteilhafte Variante der Erfindung weist eine Drossel zur Einstellung des Druckes am Ausgang des Arbeitsspaltes auf (Anspruch 17). Mit der Drossel ist eine adaptive Einstellung des Druckes am Ausgang des Arbeitsspaltes möglich, so daß ein kontrollierter Abbruch der Erosionsbögen sichergestellt werden kann.

Zusammengefaßt erlaubt die Erfindung einen besonders schnellen und unkomplizierten Wechsel zwischen einer Bearbeitung eines Werkstück mit und ohne Spülung des Arbeitsspaltes unter Druck. Damit wird die Erosionszeit gegenüber herkömmlichen Erosionsvorrichtungen verkürzt und die Bearbeitung weiter automatisiert.

Weitere Vorteile und bevorzugte Merkmale der Erfindung ergeben sich aus der nachfolgenden Beschreibung bevorzugter Ausführungsbeispiele. Diese Ausführungsbeispiele sind schematisch in der beigefügten Zeichnung dargestellt, die auch den Unterschied zwischen erfindungsgemäßen Vorrichtungen und dem bereits geschilderten Stand der Technik veranschaulicht. In der Zeichnung zeigt:
- Fig. 1: eine schematische Ansicht eines ersten Ausführungsbeispiels der Erfindung mit einem geschlossenem Dielektrikumsbehälter;
- Fig. 2: eine schematische Ansicht des Ausführungsbeispiels aus Fig. 1 mit geöffnetem Dielektrikumsbehälter;
- Fig. 3: eine schematische Ansicht eines zweiten Ausführungsbeispiels der Erfindung;
- Fig. 4: eine schematische Ansicht eines dritten Ausführungsbeispiels der Erfindung;
- Fig. 5a-e: verschiedene Erosionsvorrichtungen mit einem Druckbehälter nach dem Stand der Technik;
- Fig. 6a,b: weitere Ausführungsbeispiele von Durckbehältern nach dem Stand der Technik.

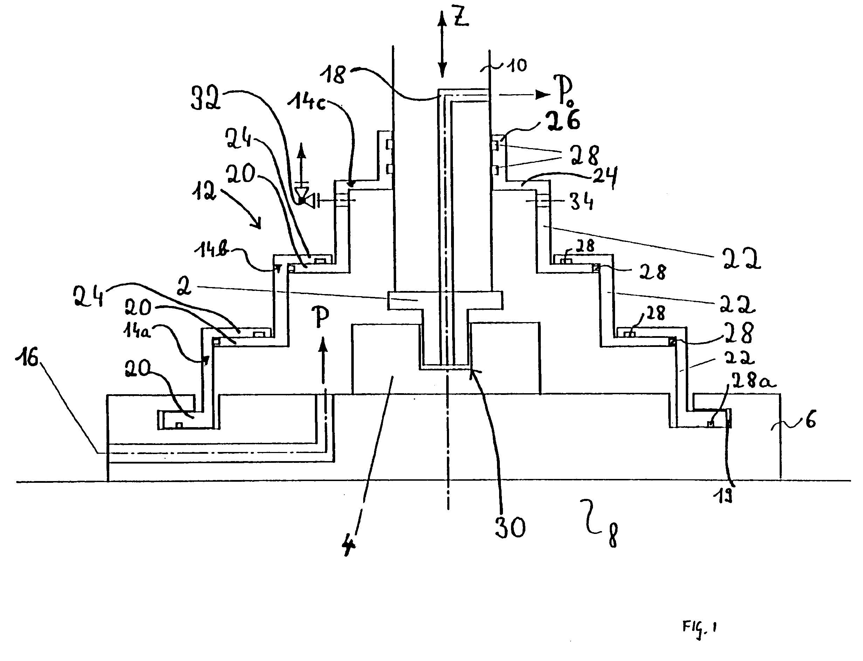

Zunächst sei das erste Ausführungsbeispiel der Fig. 1 beschrieben. Dabei wird im folgenden eine Terminologie verwendet, die der leichteren Lesbarkeit der Beschreibung dient, jedoch nicht einschränkend zu verstehen ist. Beispielsweise beziehen sich die Ausdrücke oben, unten, schmaler, breiter auf Maschinen und Vorrichtungen in üblicher Arbeitsaufstellung und Größe sowie auf in üblicher Weise angeordnete Werkstücke.

Fig. 1 beschränkt sich auf eine Darstellung erfindungswesentlicher Teile einer erfindungsgemäßen Elektroerosionsvorrichtung bzw. -maschine. Eine Senkelektrode 2 dient zur senkerosiven Bearbeitung eines Werkstücks 4. Das Werkstück 4 ist auf einem Spannelement (z.B. eine Palette) 6 befestigt, welches wiederum auf einem Maschinentisch 8 angeordnet ist. Die Senkelektrode ist an einer Pinole 10 angebracht, die in den durch einen Pfeil Z angezeigten Richtungen beweglich ist.

Ein rundum geschlossener Behälter 12 ermöglicht eine erosive Bearbeitung, bei der ein Dielektrikum unter Druck zuoder abgeführt wird. Der Behälter besteht i.w. aus dem Spannelement 6 und drei teleskopartig an- und ineinander verschiebbaren Ringelementen 14a, 14b, 14c. Nach oben hin ist der Behälter 12 durch das Pinolenelement 10 verschlossen. Das Dielektrikum wird durch eine Leitung 16 im Spannelement 6 zu- und durch eine Leitung 18, welche die Elektrode 2 und die Pinole 10 durchläuft, abgeführt.

Der Behälter 12 weist in zweierlei Hinsicht im Sinne der Erfindung aneinander gleitend verschiebbare Teilelemence auf: erstens die ineinanderschiebbaren Ringe 14 und zweitens ein als Bajonettverschluß ausgelegtes Schnellverschlußsystem. Der Bajonettverschluß wird durch eine Drehbewegung des Außenringes 14a in einer Nutenanordnung 19 im Spannelement 6 verschlossen (so daß das Außenringelement 14a am Spannelement 6 verschieblich ist).

Die Ringelemente 14a, 14b und 14c sind stufenartig ausgebildet und weisen jeweils einen ersten ringscheibenartigen Abschnitt 20, einen sich nach innen an den ersten Ringscheibenabschnitt anschliessenden zylindrischen Abschnitt 22 und einen zweiten ringscheibenartigen Abschnitt 24 auf, wobei sich der zweite ringscheibenartige Abschnitt 24 von dem dem ersten ringscheibenartigen Abschnitt 20 gegenüberliegenden Ende des Zylinders 22 nach innen hin erstreckt.

Das dritte, d.h. das innerste Ringelement 14c weist nach innen hin an seinem zweiten ringscheibenartigen Abschnitt 24 einen zweiten zylindrischen Abschnitt 26 auf. An der Innenseite des zweiten zylindrischen Abschnittes 26 ist das innere Ringelement 14c an der Pinole 10 der Erosionsvorrichtung verschieblich geführt. Die ineinandergreifenden Ringe 14a,b,c verleihen dem Behälter eine Art gestuft kegelförmige Geometrie und passen den Durchmesser des Behälters nach oben hin dem Durchmesser der Pinole an. Die Anzahl der Ringe 14 kann z.B. je nach den Abmessungen der Maschine, aber auch je nach Abmessung des zu bearbeitenden Werkstücks 4, variiert werden. Die Geometrie des Behälters 12 ermöglicht es, einen weitestgehend konstanten Dielektrikumsfluß im Arbeitsspalt 30 zu bilden und und aufrecht zu erhalten.

Die stufenartigen Ringelemente 14 sind jeweils an oder zumindest nahe zu ihren inneren und äußeren Umfangsrändern mit isolierenden Dichtungen 28 versehen. Die Dichtungen 28 sind so angeordnet und ausgelegt, daß im Behälter 12 ein zur Erosion genügend hoher Druck entstehen kann. Eine der Dichtungen 28 - die Dichtung 28a - wird im Bajonettverschluß beim Einschnappen des Bajonettverschlusses vorgespannt. Die Aussenranddichtungen 28 dichten jeweils den Außenrand des äußeren ringscheibenartigen Abschnittes 22 eines Ringelementes kleineren Durchmessers gegen den inneren Rand des zylindrischen Abschnittes 24 des jeweils nächst größeren Ringelementes ab.

Die Dichtungen 28 sind ferner derart zum Gleiten ausgelegt, daß der Behälter in Z-Richtung geöffnet und geschlossen werden kann, ohne daß die Dichtungen Schaden nehmen. In der Kammer kann praktisch jeder gewünschte Druck bis zum maximalen Kammer- bzw. Behälterdruck aufgebaut werden. Auf den Erosionsspalt bzw. die Arbeitszone 30 wirkt dabei der maximale Druckunterschied zwischen einem Druck P in der Zufuhrleitung 16 und einem Druck P₀ in der Abflußleitung 18. Die Rückwirkung auf die Pinole 10 ist vom inneren Durchmesser des inneren und oberen Ringes 14c und dem im Behälter 12 herrschenden Druck bestimmt.

Ein in der Wand des zylindrischen Abschnittes 24 des innersten Ringes 14c angeordnetes Überdruckventil 32 schützt den Behälter vor zu hohen Innendrücken. Ein ebenfalls in der Wand des zylindrischen Abschnittes 24 des innersten Ringes 14c angeordneter Hahnanschluß 34 ermöglicht den Anschluß eines Hahnes zur Entgasung des Behälters. Schließlich kann zusätzlich eine Drossel zur adaptiven Einstellung des Druckes am Ausgang des Arbeitsspaltes vorgesehen sein, so daß ein kontrollierter Abbruch von Erosionslichtbögen sichergestellt werden kann (s.u.).

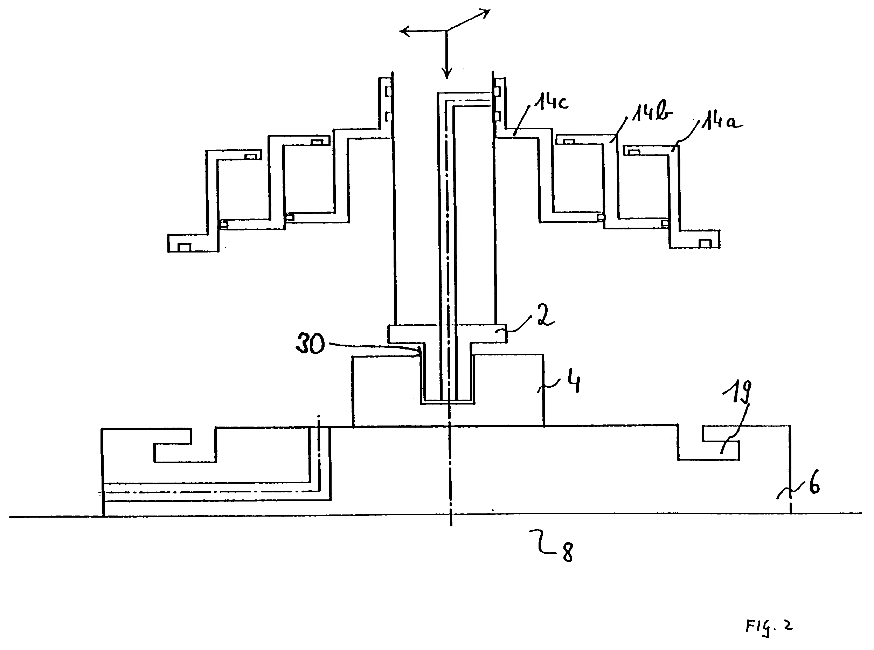

Fig. 2 zeigt das Ausführungsbeispiel der Fig. 1 mit geöffnetem Behälter 12, der zusätzlich etwas nach oben verfahren wurde. In dieser Stellung des Behälters ist eine uneingeschränkte Bearbeitung in allen Erosionsachsen der Maschine möglich. Das Dielektrikum kann dabei beispielsweise in üblicher Weise als Bad in einen weiteren Behälter gefüllt sein, dessen Boden der Maschinentisch 8 ist und der seitlich von (nicht dargestellten) Seitenwänden begrenzt wird. Mit der Erfindung ist es damit möglich, schnell zu einer konventionellen Bearbeitungstechnik (ohne eine Dielektrikumszufuhr unter Druck) umzuschalten (z.B. zu einer Planetärerosion oder zu einer Erosion in drei Achsrichtungen). Zum "Umschalten" ist lediglich der Behälter vom Dielektrikum zu entsorgen, der Bajonettverschluß zu entrasten und das "Teleskop" einzufahren.

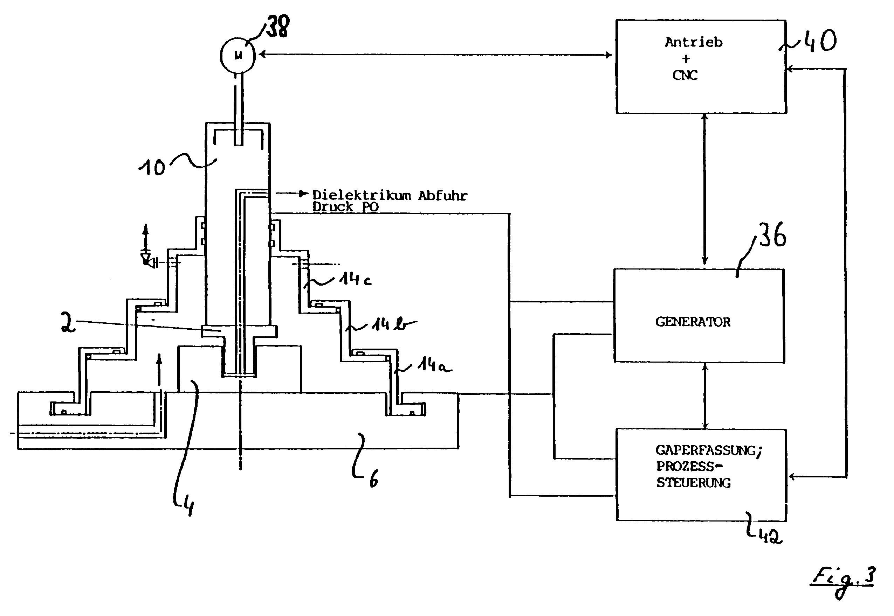

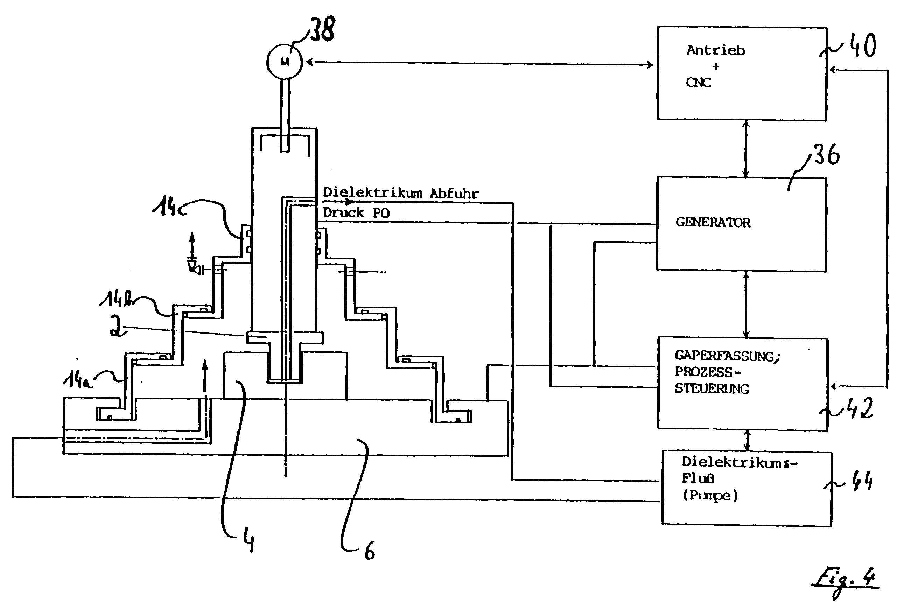

Fig. 3 und 4 zeigen zusätzlich einen an die Senkelektrode 2 und das Spannelement 6 angeschlossenen Impuls und/oder Stromgenerator 36, wobei das Spannelement wiederum leitend mit dem Werkstück 4 verbunden ist. Ein an der Pinole 10 angeordneter Motor 38 ermöglicht das Verfahren der Senkelektrode 2 in Z-Richtung.

Der Motor 38 ist an eine in einen Steuerungsrechner (CNC) 40 integrierte Antriebseinheit angeschlossen. Die CNC 40 ist ihrerseits mit dem Generator 40 und einer kombinierten Einrichtung 42 zur Spaltparametererfassung und Prozeßsteuerung verbunden. Die Einrichtung 42 ist über einen Datenanschluß (jeweils die Verbindungen mit Pfeilen an den Enden) mit dem Generator 36 verbunden. Zusätzlich ist sie an die Stromleitungen zwischen Generator 36 sowie Werkstück 2 und Spannelement 6 gekoppelt. Die Elektroerosionsvorrichtung weist damit die Anspruch 15 aufgezeigte Schaltungseinheit zum Erfassen von Spannung und Strom im Erosionsspalt 30 auf. Diese ist wiederum in die Prozessteuerungseinrichtung 42 integriert, mit der u.a. auch der Elektrodenvorschub bestimm- und variierbar und eine Anpassung der Generatorparameter zu einer weiteren Optimierung der Erosion möglich ist.

Die Vorrichtung kann mit praktisch jedem beliebigen Generator und jeder beliebigen Prozeßsteuerung kombiniert werden. Weitere wichtige Vorteile sind eine Erhöhung der Strombelastbarkeit der Werkstück- un der Elektrodenoberfläche und die reduzierten Abmessungen des Arbeitsspaltes 30.

Die in Fig. 3 gezeigte Vorrichtung eignet sich ferner aufgrund der gut konstant haltbaren Spülbedingungen besonders gut für eine Erosion nach dem Verfahren von Dr. Nosulenko Ivanovic (DE 27 33 430 C2). Bei diesem Verfahren wird anstelle eines Impulsgenerators ein (Gleich-)Stromgenerator verwendet und ein stationärer Lichtbogen als elektrische Entladung genutzt, wobei die Flüssigkeit im Spalt bei einer Vorbearbeitung mindestens 1m/s beträgt und bei einer Fertigbearbeitung um eine Größenordnung höher ist.

In Fig. 4 ist an die Prozeßsteuereinrichtung 42 zusätzlich noch eine Dielektrikumsflußpumpe 44 angeschlossen, so daß die Zu- und die Ableitung des Dielektrikums ebenfalls in Abhängigkeit der Erosionsparameter steuerbar ist. Die Prozesssteuerungseinrichtung 42 ist dabei zur Bestimmung des Elektrodenvorschubs und zur Anpassung der Generatorparameter sowie insbesondere zur Optimierung des Erodierverfahrens ausgelegt.

Die Erfindung läßt sich je nach Wunsch natürlich auch in anderer Weise realisieren. Denkbar ist z.B. eine Ausführungsform, bei der ein unteres Ringelement fest am Boden des Behälters und ein oder mehr Ringelemente an der Pinole angebracht sind. Damit bildet das untere Ringelement im Zusammenspiel mit dem Bodenelement nach dem Einfahren des oberen Ringelementes zugleich den offenen Behälter.

Denkbar ist ferner auch eine Ausführung, bei welcher der Maschinentisch 8 als Behälterboden benutzt wird. Die Nutenanordnung 19 und die Leitung 16 können dabei z.B. in der Tischplatte ausgebildet bzw. in diese integriert werden.

## Patentansprüche

1. Elektroerosionsvorrichtung mit einer Pinole (10) zur Verschiebung der Werkzeugelektrode (2) in Z-Richtung und einem allseits verschließbaren Behälter (12), welcher:
a) zur Aufnahme eines Werkstückes (4) und einer insbesondere unter Druck (P) zu- und abführbaren Flüssigkeit ausgelegt ist, und aufweist:
b) ein das Werkstück (4) tragendes Bodenelement (6)
c) und ein Deckelelement (14a,14b,14c), das
c1) die Pinole (10) gleitend verschiebbar umgreift, und
c2) mit dem Bodenelement (6) über ein Verschlußsystem kraftschlüssig verbind- und von diesem lösbar ist,
dadurch gekennzeichnet, daß
d) das Deckelelement (14a,14c,14b) aus weiteren Teilelementen (14a;14b;14c) besteht, die gleitend aneinander verschiebbar sind.

2. Elektroerosionsvorrichtung nach Anspruch 1, dadurch gekennzeichnet, daß das Deckelelement (14a,14c,14b) die Pinole (10) unmittelbar oder über ein an der Pinole (10) starr angebrachtes Zwischenstück (14c) gleitend verschiebbar umgreift.

3. Elektroerosionsvorrichtung nach Anspruch 1 oder 2, dadurch gekennzeichnet, daß das Bodenelement (6) ein Maschinentisch ist.

4. Elektroerosionsvorrichtung nach einem der vorstehenden Ansprüche, dadurch gekennzeichnet, daß die relativ aneinander gleitend verschiebbaren Teilelemente (14a;14b;14c) als axial teleskopartig ineinanderschiebbare Ringelemente verschiedenen Durchmessers ausgelegt sind.

5. Elektroerosionsvorrichtung nach Anspruch 4, dadurch gekennzeichnet, daß die Ringelemente (14a, 14b, 14c) - in einer Querschnittsansicht gesehen, durch deren Ebene die Ringachse verläuft - stufenartig ausgebildet sind.

6. Elektroerosionsvorrichtung nach Anspruch 4 oder 5, dadurch gekennzeichnet, daß die Teilelemente (14a, 14b, 14c) einen zur Ringachse zylindrischen Abschnitt (22) aufweisen, an dessen beide Enden sich ringscheibenartige Abschnitte (20, 24) anschliessen, wobei einer der beiden ringscheibenartigen Abschnitte (20) relativ zum zylindrischen Abschnitt radial nach außen und der andere ringscheibenartige Abschnitt radial nach innen gerichtet (24) ist.

7. Elektroerosionsvorrichtung nach einem der Ansprüche 3 bis 6, dadurch gekennzeichnet, daß das die Pinole (10) umgreifende Teilelement (14c) einen zweiten inneren zylindrischen Abschnitt (26) aufweist, dessen Innenseite an der Pinole (10) der Erosionsvorrichtung gleitend befestigt ist.

8. Elektroerosionsvorrichtung nach einem der Ansprüche 4 bis 7, dadurch gekennzeichnet, daß die stufenartigen Teilelemente (14a, 14b, 14c) an ihrem inneren und/oder äußeren Umfangsrand mit einer oder mehreren Dichtung(en) (28) versehen sind.

9. Elektroerosionsvorrichtung nach Anspruch 8, dadurch gekennzeichnet, daß die Aussenranddichtungen (28) jeweils den Außenrand des äußeren ringscheibenartigen Abschnittes (20) eines Teilelementes (14a,14b,14c) kleineren Durchmessers gegen den inneren Rand des zylindrischen Abschnittes (20) des jeweils nächst größeren Teilelementes (14a,14b,14c) abdichten.

10. Elektroerosionsvorrichtung nach einem der vorstehenden Ansprüche, dadurch gekennzeichnet, daß das Werkstück (4) in Z-Richtung verschieblich geführt ist.

11. Elektroerosionsvorrichtung nach einem der vorstehenden Ansprüche, gekennzeichnet durch ein in einer Wand des Behälters (12) angeordnetes Überdruckventil (32) und/oder einen Hahn zur Entgasung des Behälters.

12. Elektroerosionsvorrichtung nach einem der vorstehenden Ansprüche, dadurch gekennzeichnet, daß das Verschlußsystem ein Schnellverschlußsystem, insbesondere ein Bajonettverschluß ist.

13. Elektroerosionsvorrichtung nach einem der vorstehenden Ansprüche, gekennzeichnet durch einen Impuls- und/oder Stromgenerator (36) und eine Einrichtung zum Erfassen von Spannung und Strom im Erosionsspalt.

14. Elektroerosionsvorrichtung nach einem der vorstehenden Ansprüche, gekennzeichnet durch eine Prozessteuerungseinrichtung (42) zur Bestimmung des Elektrodenvorschubs und zur adaptiven Anpassung der Generatorparameter an die Erosionsbedingungen zur Optimierung der Erosion.

15. Elektroerosionsvorrichtung nach einem der vorstehenden Ansprüche, gekennzeichnet durch eine Auslegung der Prozeßsteuerungseinrichtung (42) zur adaptiven Anpassung und Einstellung der Strömungsgeschwindigkeit des Dielektrikums über eine Dielektrikums-Flußpumpe (44).

16. Elektroerosionsvorrichtung nach einem der vorstehenden Ansprüche, dadurch gekennzeichnet, daß das Dielektrikum durch eine Senkelektrode (2) oder durch eines der Teilelemente (6,14a,14b,14c) hindurch der Erodierzone bzw. dem Arbeitsspalt (30) zu- oder von ihr/ihm abgeleitet wird.

17. Elektroerosionsvorrichtung nach einem der vorstehenden Ansprüche, gekennzeichnet durch eine Drossel zum Einstellen des Druckes am Ausgang des Arbeitsspaltes (30).

## Claims

1. Electro-erosive device with a centre sleeve (10) for displacing the working electrode (2) in the Z direction and with a container (12) closable on all sides, which:
a) is designed for receiving a workpiece (4) and a liquid which may be fed and returned particularly under pressure (P), and further has:
b) a base member (6) carrying the workpiece (4),
c) and a cover member (14a, 14b, 14c), which
c1) engages slidingly and movably about the centre sleeve (10) and
c2) is connectable to and detachable from the base member (6) in a friction-locking manner via a closure system,
characterised in that
d) the cover member (14a, 14c, 14b) comprises further part members (14a; 14b; 14c), which are slidingly movable one on the other.

2. Electro-erosive device according to claim 1, characterised in that the cover member (14a, 14c, 14b) movably and slidingly engages about the centre sleeve (10) directly or via an intermediate part (14c) rigidly attached to the centre sleeve (10).

3. Electro-erosive device according to claim 1 or 2, characterised in that the base member (6) is a machine bench.

4. Electro-erosive device according to one of the preceding claims, characterised in that the part members (14a; 14b; 14c) slidingly movable relative to one another are designed as annular members of varying diameters which may be pushed one into the other axially and telescopically.

5. Electro-erosive device according to claim 4, characterised in that the annular members (14a, 14b, 14c), seen in a cross-sectional view, through the plane of which the ring axis extends, are step-like.

6. Electro-erosive device according to claim 4 or 5, characterised in that the part members (14a, 14b, 14c) have a portion (22) cylindrical to the ring axis, on both ends of which there connect annular disc-like portions (20, 24), one of the two annular disc-like portions (20) being aligned radially outwardly relative to the cylindrical portion, and the other annular disclike portion being aligned radially inwards (24).

7. Electro-erosive device according to one of claims 3 to 6, characterised in that the part member (14c) engaging around the centre sleeve (10) has a second inner cylindrical portion (26) the inner side of which is slidingly attached to the centre sleeve (10) of the erosive device.

8. Electro-erosive device according to one of claims 4 to 7, characterised in that the step-like part members (14a, 14b, 14c) are provided at their inner and/or outer peripheral edge with one or more seals (28).

9. Electro-erosive device according to claim 8, characterised in that the external edge seals (28) respectively seal the outer edge of the outer annular disc-like portion (20) of a part member (14a, 14b, 14c) of smaller diameter against the inner edge of the cylindrical portion (20) of the respectively next largest part member (14a, 14b, 14c).

10. Electro-erosive device according to one of the preceding claims, characterised in that the workpiece (4) is movably guided in the Z direction.

11. Electro-erosive device according to one of the preceding claims, characterised by a pressure release valve (32) and/or a cock for gas release from the container, located in one wall of the container (12).

12. Electro-erosive device according to one of the preceding claims, characterised in that the closure system is a rapid closure system, in particular a bayonet closure.

13. Electro-erosive device according to one of the preceding claims, characterised by a pulse and/or current generator (36) and an arrangement for detecting voltage and current in the erosion gap.

14. Electro-erosive device according to one of the preceding claims, characterised by a process control device (42) for determining the electrode feed and for self-adjusting adaptation of the generator parameters to the erosion conditions and in order to optimise erosion.

15. Electro-erosive device according to one of the preceding claims, characterised by a design of the process control arrangement (42) for self-adjusting adaptation and setting of the flow speed of the dielectric via a dielectric flow pump (44).

16. Electro-erosive device according to one of the preceding claims, characterised in that the dielectric may be fed or returned from the erosion zone or the working gap (30) through a cavity sinking electrode (2) or through one of the part members (6, 14a, 14b, 14c).

17. Electro-erosive device according to one of the preceding claims, characterised by a throttle for adjusting the pressure at the output of the working gap (30).

## Revendications

1. Dispositif d'électro-érosion comportant une douille (10) servant à déplacer l'électrode-outil (2) dans la direction (Z), et un récipient (12) pouvant être fermé de tous côtés et qui :
a) est conçu pour loger une pièce à usiner (4) et un liquide pouvant être amené et évacué notamment sous pression (P), et comporte :
b) un élément de base (6) portant la pièce à usiner (4), et
c) un élément formant couvercle (14a,14b,14c), qui
c1) enserre la douille (10) de manière à pouvoir se déplacer par glissement, et
c2) peut être relié à l'élément de base (6) selon une liaison de force par l'intermédiaire d'un système de fermeture et peut en être détaché,
caractérisé en ce que
d) l'élément formant couvercle (14a,14c,14b) est constitué d'autres parties (14a;14b;14c) qui sont déplaçables par glissement les unes sur les autres.

2. Dispositif d'électro-érosion selon la revendication 1, caractérisé en ce que l'élément formant couvercle (14a,14c,14b) entoure, avec possibilité de déplacement par glissement, la douille (10) directement ou moyennant l'interposition d'un élément intercalaire (14c) monté rigidement sur la douille (10).

3. Dispositif d'électro-érosion selon la revendication 1 ou 2, caractérisé en ce que l'élément de base (6) est une table de machine-outil.

4. Dispositif d'électro-érosion selon l'une des revendications précédentes, caractérisé en ce que les parties (14a;14b;14c), qui sont déplaçables par glissement les unes sur les autres, sont conçues sous la forme d'éléments annulaires pouvant être emboîtés de façon télescopique les uns dans les autres et possédant des diamètres différents.

5. Dispositif d'électro-érosion selon la revendication 4, caractérisé en ce que les éléments annulaires (14a,14b,14c) sont agencés avec une forme étagée - vus selon une coupe transversale, dont le plan contient l'axe des éléments annulaires.

6. Dispositif d'électro-érosion selon la revendication 4 ou 5, caractérisé en ce que les parties (14a,14b,14c) possèdent un tronçon cylindrique (22) centré sur l'axe des éléments annulaires et aux deux extrémités duquel se raccordent des tronçons (20,24) en forme de disques annulaires, l'une des deux sections (20) en forme de disques annulaires s'étendant radialement sur le côté extérieur par rapport au tronçon cylindrique tandis que l'autre tronçon en forme de disque annulaire (24) s'étend radialement vers l'intérieur.

7. Dispositif d'électro-érosion selon l'une des revendications 3 à 6, caractérisé en ce que la partie (14c), qui entoure la douille (10), possède un second tronçon cylindrique intérieur (26), dont le côté intérieur est fixé, avec possibilité de glissement, sur la douille (10) du dispositif d'électro-érosion.

8. Dispositif d'électro-érosion selon l'une des revendications 4 à 7, caractérisé en ce que les parties de forme étagée (14a, 14b, 14c) comportent, sur leur bord périphérique intérieur et/ou extérieur, une ou plusieurs garnitures d'étanchéité (28).

9. Dispositif d'électro-érosion selon la revendication 8, caractérisé en ce que les garnitures d'étanchéité (28) situées sur le bord extérieur établissent une étanchéité entre respectivement le bord extérieur du tronçon extérieur en forme de disque annulaire (20) d'une partie (14a,14b,14c) de diamètre inférieur et le bord intérieur du tronçon cylindrique (20) de la partie (14a,14b,14c) dont la taille est immédiatement supérieure.

10. Dispositif d'électro-érosion selon l'une des revendications précédentes, caractérisé en ce que la pièce à usiner (4) est guidée de manière à être déplaçable dans la direction (Z).

11. Dispositif d'électro-érosion selon l'une des revendications précédentes, caractérisé par une soupape de sécurité (32) disposée dans une paroi du récipient (12) et/ou un robinet pour dégazer le récipient.

12. Dispositif d'électro-érosion selon l'une des revendications précédentes, caractérisé en ce que le système de fermeture est un système de fermeture rapide, notamment un système de fermeture à baïonnette.

13. Dispositif d'électro-érosion selon l'une des revendications précédentes, caractérisé par un générateur d'impulsions et/ou de courant (36) et par un dispositif pour détecter une tension et un courant dans la fente d'érosion.

14. Dispositif d'électro-érosion selon l'une des revendications précédentes, caractérisé par un dispositif de commande de processus (42) pour déterminer l'avance de l'électrode et pour commander de façon adaptative les paramètres du générateur aux conditions d'érosion pour optimiser l'érosion.

15. Dispositif d'électro-érosion selon l'une des revendications précédentes, caractérisé par un agencement du dispositif de commande de processus (42) pour commander et régler d'une manière adaptative la vitesse d'écoulement du diélectrique, au moyen d'une pompe (44) de circulation du diélectrique.

16. Dispositif d'électro-érosion selon l'une des revendications précédentes, caractérisé en ce que le diélectrique est envoyé à la zone d'érosion ou à la fente de travail (30) / en est retiré au moyen d'une électrode (2) pouvant être abaissée ou au moyen de l'une des parties (6,14a,14b,14c).

17. Dispositif d'électro-érosion selon l'une des revendications précédentes, caractérisé par un étranglement servant à régler la pression à la sortie de la fente de travail (30).
